# FASCICULE DE BREVET EUROPEEN

(11) **EP 3 113 025 B1**
(45) Date de publication et mention de la délivrance du brevet: **21.03.2018**
(21) Numéro de dépôt: 16177501.0
(22) Date de dépôt: 01.07.2016
(51) Int. Cl.: G06F 11/30, G06F 11/34, G06F 11/22

(54) **MECANISME DE DIAGNOSTIC AUTOMATIQUE A PARTIR D'INFORMATIONS ISSUES D'UN SYSTEME DE SURVEILLANCE APPLICATIVE**
AUTOMATISCHER DIAGNOSTIK-MECHANISMUS MITHILFE VON INFORMATIONEN AUS EINEM APPLIKATIVEN ÜBERWACHUNGSSYSTEM
AUTOMATIC DIAGNOSTIC MECHANISM USING INFORMATION FROM AN APPLICATION MONITORING SYSTEM

(30) Priorité: 02.07.2015 FR 1556275
(43) Date de publication de la demande: 04.01.2017
(73) Titulaire: Bull S.A.S., 78340 Les Clayes-sous-Bois (FR)
(72) Inventeur: DEMEILLIEZ, Bruno, 38330 Montbonnot Saint Martin (FR); ROY, Bernard, 38140 Beaucroissant (FR); ALVAREZ MARCOS, José Ignacio, 69220 Saint Jean d'Ardières (FR)
(74) Mandataire: Debay, Yves

(56) Documents cités:
- EP-A1- 2 770 439
- WO-A1-2007/038953
- WO-A1-2010/044797
- US-B1- 8 620 921

## Description

### DOMAINE TECHNIQUE DE L'INVENTION

La présente invention concerne le domaine de la surveillance et des tests de performance d'infrastructures informatiques offrant des services applicatifs et plus particulièrement celui des performances d'un système en production.

Lorsqu'une application est utilisée en production sur une infrastructure, les demandes de ressource de l'application ne sont pas régulières, soit pour le déclenchement de taches périodiques (traitements batch) soit pour l'usage de l'application de façon saisonnière (période de clôture, lancement des campagnes...). En informatique, un traitement par lots (*batch processing* en anglais) est un enchaînement automatique d'une suite de commandes (processus) sur un ordinateur sans intervention d'un opérateur.

L'objectif de la gestion de la capacité (*capacity planning* en anglais) est de garantir que l'infrastructure informatique répond aux exigences de qualité de service en alignement avec les besoins métiers.

La gestion de capacité des ressources informatiques est une activité dont l'objectif est de surveiller l'évolution de différentes métriques liées à l'utilisation des ressources (processeur, entrées/sorties, mémoire, etc.) afin d'anticiper les ajustements d'infrastructure nécessaire pour accélérer la réponse aux incidents entrainant une dégradation voire une interruption de service.

La difficulté dans l'analyse des métriques relevées par les indicateurs est d'établir des corrélations entre ces indicateurs afin d'anticiper l'évolution de la consommation de ces ressources ou d'évaluer l'impact d'évolutions métiers sur ces ressources.

Ces corrélations sont généralement modélisées manuellement par le responsable d'exploitation, en prenant en compte la chaîne de liaison des applications qui est une représentation schématique des interactions entre les différents composants d'architecture d'un sous-périmètre donné.

L'analyse de la corrélation entre les métriques issues de cette surveillance est actuellement réalisée par le responsable d'exploitation en vue de réaliser les ajustements nécessaires. Cette analyse peut être basée sur de nombreuses variables issues de la chaîne de liaison et son interprétation difficile est rarement faite de façon systématique.

L'analyse des évènements de production et l'action corrective qui en résulte reposent sur l'expérience du responsable d'exploitation et sa capacité à compiler manuellement les différentes métriques. La réponse technique peut alors engendrer une réponse inappropriée au problème avec le risque d'induire des effets collatéraux dans d'autres parties du système d'information.

Dans la suite une grille informatique (en anglais, *grid*) désigne une infrastructure virtuelle constituée d'un ensemble de ressources informatiques potentiellement partagées, distribuées, hétérogènes, délocalisées et autonomes.

Une grille est en effet une infrastructure de traitement réparti, c'est-à-dire des équipements techniques d'ordres matériel et logiciel. Cette infrastructure est qualifiée de virtuelle, car les relations entre les entités qui la composent n'existent pas sur le plan matériel, mais d'un point de vue logique:
Une grille garantit des qualités de service non triviales, c'est-à-dire qu'elle se distingue des autres infrastructures dans son aptitude à répondre adéquatement à des exigences (accessibilité, disponibilité, fiabilité, ...) compte tenu de la puissance de calcul ou de stockage qu'elle peut fournir.

Dans la suite un ramasse-miettes, ou récupérateur de mémoire, ou glaneur de cellules (en anglais garbage collector, abrégé en GC), désigne un sous-système informatique de gestion automatique de la mémoire. Il est responsable du recyclage de la mémoire préalablement allouée puis inutilisée.

Dans la suite la *scalability* ou scalabilité (calque de traduction) désigne la capacité d'un produit à s'adapter à un changement d'ordre de grandeur de la demande (montée en charge), en particulier sa capacité à maintenir ses fonctionnalités et ses performances en cas de forte demande.

Dans la suite les service level objectives (SLOs), en français: objectifs de niveau de services, sont un élément clé de l'accord de niveau de services (service level agreement, SLA) entre un fournisseur de service et un client. Les SLOs sont considérés comme un moyen de mesurer la(les) performance(s) du fournisseur de service et sont aussi là pour éviter des conflits entre les deux parties, basés sur un malentendu.

Il y a souvent confusion dans l'utilisation des SLAs et SLOs. Le SLA est le contrat dans sa globalité : il spécifie quel service doit être fourni, comment il est maintenu, les temps, les lieux, les coûts, la performance et les responsabilités des parties impliquées. Les SLOs sont des caractéristiques techniques spécifiques et mesurables des SLAs, comme la disponibilité, la fréquence, le temps de réponse ou encore la qualité.

Un SLO peut être composé d'une ou plusieurs mesures de qualité de service (QoS). Par exemple, un SLO de disponibilité peut dépendre de plusieurs composants, chacun d'entre eux pourra avoir une mesure de QoS de disponibilité propre. La combinaison de toutes ces mesures de qualité de service dans un SLO dépendra de la nature et de l'architecture du service et sera mémorisée.

Dans la suite, le système de traitement transactionnel ou STT (domaine informatique) est un système capable d'exécuter un ensemble d'opérations unitaires dans un contexte transactionnel donné. Le STT doit pouvoir garantir à tout moment les propriétés inhérentes à une transaction informatique pour les données qu'il gère.

L'expression « traitement transactionnel » est la traduction en français de l'anglais transaction processing (TP).

Dans la suite JDBC (Java DataBase Connectivity) est une interface de programmation créée pour les programmes utilisant la plateforme Java. Elle permet aux applications Java d'accéder par le biais d'une interface commune à des sources de données pour lesquelles il existe des pilotes JDBC. Normalement, il s'agit d'une base de données relationnelle, et des pilotes JDBC sont disponibles pour tous les systèmes connus de bases de données relationnelles.

Dans la suite l'interface de programmation Java Message Service (JMS) permet d'envoyer et de recevoir des messages de manière asynchrone entre applications ou composants Java, en constituant des files.

Dans la suite, une métrique logicielle est une compilation de mesures issues des propriétés techniques ou fonctionnelles d'un logiciel. Les métriques logicielles peuvent être classées en trois catégories :
- Maintenance applicative
- Qualité applicative
- Respect des processus de développement

Elles peuvent être simples ou plus complexes. Elles se composent toujours de mesures dites « de base », par exemple le nombre de lignes de code, la complexité cyclomatique, le nombre de commentaires.

Dans la suite, une sonde informatique est un logiciel associé à un équipement qui permet d'effectuer, de gérer et faire remonter vers un équipement de surveillance des mesures destinées à informer de la qualité des flux réseau ou de la qualité de service (QoS).

Dans la suite, un moteur de règles est généralement un système logiciel qui exécute une ou plusieurs règles de gestion dans un environnement de production. Un moteur de règle est généralement fourni comme composant d'un système de gestion de règles qui, parmi d'autres fonctionnalités, permet d'enregistrer, définir, classifier et gérer toutes les règles, vérifier la cohérence de leur définition, définir les relations entre différentes règles, et relier certaines d'entre elles à d'autres applications, qui sont affectées par ces règles ou nécessitées par celles-ci.

### ÉTAT DE LA TECHNIQUE ANTÉRIEURE

À ce jour, des solutions existent, permettant à travers des portails de surveiller l'utilisation des ressources et les comparer à des niveaux de services applicatifs. Cette analyse automatique peut générer des alertes envoyées au responsable d'exploitation qui devra décider des actions correctives éventuelles à entreprendre. Mais aucune de ces solutions ne génère actuellement des préconisations d'évolutions de l'infrastructure. C'est au responsable d'exploitation de déduire des alertes les évolutions qu'il convient de faire.

Ainsi, il est également connu dans le domaine des tests de performance des applications la demande PCT WO 2007/038953 qui enseigne un procédé pour tester automatiquement la performance des applications fonctionnant sur une structure de traitement réparti (GRID) comprenant un réseau d'unités de traitement, le procédé comprenant les étapes de :
- Exécution d'au moins une application sur ladite structure de traitement réparti ;
- Chargement de l'application avec une charge de travail afin de produire une charge de travail de traitement répartie sur ladite structure de traitement ;
- Détection de l'état de fonctionnement desdites unités de traitement dans ladite structure de traitement répartie sous ladite charge de traitement et
- Production de signaux indicatifs de l'information dudit état de fonctionnement ;
- Collecte desdits signaux d'information, et utilisation d'un moteur de règles pour modifier sélectivement en fonction des règles dudit moteur de règles et des signaux d'information recueillis, au moins l'un des éléments suivants:
   - la charge de travail du traitement sur l'application, et
   - l'état de fonctionnement d'au moins une unité de traitement dans ladite structure de traitement répartie (grille).

Ce document enseigne que le rendement des applications testées automatiquement s'exécute sur la structure de traitement distribuée comprenant un réseau d'unités de traitement distribuées, et consiste à tester au moins un des facteurs suivants :
- la scalabilité de l'application, à savoir la capacité d'une demande pour assurer une augmentation du débit avec une augmentation du nombre des unités de traitement dans ledit réseau ;
- le degré de parallélisme, à savoir la capacité d'une application à paralléliser l'exécution des activités à réaliser ;
- la sensibilité de débit, à savoir la capacité d'une application pour assurer un niveau de débit donné en présence de charges applicatives de différents types;
- la présence de goulets d'étranglement, à savoir la présence de composants d'application susceptibles d'affecter singulièrement la performance d'une application entière en termes de débit maximal à atteindre;
- l'absence d'effets dominos, à savoir la capacité d'une application pour assurer la disponibilité de ses fonctionnalités indépendamment de la non-disponibilité de l'une quelconque desdites unités de traitement dans ledit réseau ;
- la stabilité, à savoir la capacité d'une demande pour fonctionner de manière stable ;
- le stress, à savoir la capacité d'une application à soutenir un pic de charge de traitement ;
- l'adaptabilité, à savoir la capacité d'une application à traiter avec différentes priorités des flux de travail (*workflows*) de différents types afin de garantir les objectifs d'affaires donnés ;
- l'adaptabilité en présence de perturbations extérieures, à savoir la capacité d'une application à exécuter les flux de travail avec des priorités différentes en fonction des niveaux d'activité qui leur sont associés lorsque les unités de traitement dans la grille sont également utilisées par des composants d'application externe à l'application testée ;
- les politiques de distribution de flux de travail, à savoir la capacité d'une application pour régir la répartition des flux de travail aux unités de traitement dans la grille ;
- les politiques d'occupation des ressources, à savoir la capacité d'une application pour s'assurer que les ressources matérielles (utilisation des CPU, de la mémoire, du nombre de processus exécutés sur l'appareil, le nombre d'entrées sorties et d'opérations réalisées) sur lesdites unités de traitement dans la grille sont occupées dans le respect des règles prédéfinies.

Indépendamment du domaine différent puisque ce document enseigne de tester automatiquement la performance des applications, cette solution présente l'inconvénient de proposer deux réactions très limitées, à savoir diminuer la charge de l'application ou rendre une unité de traitement active ou inactive, pour l'application.

La diminution de la charge n'est pas souhaitable pour une application qui tourne en production pour un client et délivre des services, car une telle solution peut créer des goulets d'étranglement et augmenter les temps de réponse perçus par l'utilisateur final.

Rendre actives des unités de traitement supplémentaires est peut être une solution, certes qui peut s'avérer toutefois onéreuse, mais également inadaptée selon le type de problème rencontré, car il existe des ressources autres que l'unité de traitement et ces autres ressources peuvent être à l'origine, en tout ou en partie, du problème.

Il est connu également par le brevet US 8856797B1 un système configuré pour gérer l'exécution des programmes dans un service d'exécution du programme que fournit une pluralité de ressources informatiques, individuelles, configurables pour exécuter un ou plusieurs programmes, le système comprenant du matériel informatique tangible configuré pour exécuter un gestionnaire de capacité comprenant :
un module de prévision configuré pour:
   recevoir au moins un historique de mesure de la demande pour une ressource de calcul lorsque la ressource de calcul a été associée à un programme exécuté par la fonction d'exécution de programme;
   prédire une demande pour la ressource informatique à un instant futur, dans lequel la prédiction est basée au moins en partie sur l'historique de mesure; et
   déterminer une limite supérieure et une plus faible quantité de la ressource informatique pour être associé avec le programme à l'instant futur, dans lequel la détermination est basée au moins en partie sur la demande prédite; et
un module de commande configuré pour:
   recevoir une détermination d'une métrique de système associée à un paramètre de fonctionnement de la ressource informatique associé au programme;
   déterminer si la métrique de système est dans une plage de fonctionnement désirée; et
en réponse à une détermination que la mesure de système n'est pas dans la plage de fonctionnement souhaitée:
   déterminer dans quelle mesure la métrique du système est en dehors de la plage de fonctionnement souhaitée;
   déterminer un ajustement de la quantité de la ressource informatique associée au programme, basé au moins en partie sur une règle d'ajustement, l'ajustement proportionnel à combien hors de la plage de fonctionnement souhaitée pour la métrique du système est déterminé pour;
   ajuster la quantité de la ressource informatique associée au programme basé au moins sur l'ajustement, dans lequel la quantité est ajustée entre la quantité supérieure et inférieure déterminées par le module de prévision; et
   modifier la règle d'ajustement basée au moins en partie sur la détermination ultérieure que la métrique du système est en dehors de la plage de fonctionnement souhaitée.

La règle d'ajustement influe sur la détermination d'un réglage d'une quantité de noeuds de calcul associés au programme.

La métrique de système surveillé selon ce document est basée sur l'utilisation du processeur, la bande passante de réseau, la latence du réseau, la disponibilité des ressources de calcul, ou l'utilisation de la mémoire de la ressource informatique associée au programme et sur le nombre de transactions reçues, le nombre de messages transmis, ou la durée pendant laquelle le programme a été exécuté dans le service d'exécution de programme.

Enfin le module de commande comprend un contrôleur de logique floue ou un contrôleur proportionnel-intégral-dérivé.

Dans un tel système l'ajustement, par une règle, de la quantité de ressources informatiques affectées à l'application se fait automatiquement dès qu'une métrique n'est plus dans une plage de fonctionnement désirée et la règle d'ajustement est modifiée dès que la métrique du système n'est plus dans la plage de fonctionnement.

On comprend que le gestionnaire de capacité utilise un faible nombre d'information et de façon peu adaptable à tout type d'applications.

De plus l'ajustement est automatique quelque soit les circonstances sans laisser de flexibilité, sans tenir compte de la durée de non-respect du niveau de qualité globale de service de l'application ou sans utiliser l'expérience acquise sur des applications similaires ou sur des problèmes similaires.

Dans le document US 8620921 B1 il est enseigné un système et une méthode pour gérer dynamiquement les objectifs de niveau de service des charges de travail du système de stockage d'un cluster. Ledit système comprenant un matériel informatique configuré pour :
recevoir une pluralité d'ensemble de données, chaque ensemble de données comprenant une pluralité de métriques d'entrée pour une charge de travail d'avant-plan, des valeurs pour la pluralité des métriques d'entrée d'un premier ensemble de charges de travail d'arrière-plan, et une valeur pour une métrique de sortie pour la charge de travail d'avant-plan ;
résumer, pour chaque ensemble de données, les valeurs reçues pour chaque métrique d'entrée du premier ensemble de charges de travail d'arrière-plan pour produire une valeur représentative de chaque métrique d'entrée du premier ensemble de charges de travail d'arrière-plan ;
produire une pluralité d'ensembles de tuples, chaque ensemble de tuples représentant un ensemble de données, chaque ensemble de tuples comprenant des valeurs pour la pluralité de métriques d'entrée de la charge de travail d'avant-plan, les valeurs représentatives pour la pluralité de métriques d'entrée du premier ensemble de charges de travail d'arrière-plan, et une valeur pour la métrique de sortie de la charge de travail d'avant-plan ; et
traiter la pluralité d'ensembles de tuples en utilisant l'apprentissage machine (machine learning) pour produire une fonction qui fait correspondre la pluralité des métriques d'entrée de la charge de travail d'avant-plan et le premier ensemble de charges de travail d'arrière-plan à la métrique de sortie de la charge de travail d'avant-plan.

Le système utilise un planificateur qui surveille les ressources de stockage allouées à différentes tâches ou applications et, en cas d'ajout de tâches supplémentaires et/ou de la non exécution des objectifs de niveau de service par exemple, fait appel à un moteur d'évaluation pour proposer des états/solutions. Ces états/solutions, correspondant à une configuration du système de stockage pour lequel les objectifs de niveau de service peuvent être atteints, sont ensuite utilisés par un moteur de modélisation pour trouver la configuration optimale. Pour rendre le moteur de modélisation performant, un moteur d'entraînement, utilisant des techniques d'apprentissage automatique, est utilisé afin d'effectuer des tests au moyen d'algorithmes.

Tout comme les documents cités ci-dessus, l'invention enseignée, en particulier le système de surveillance, présente des inconvénients. En effet, le champ d'application du système de la méthode décrite est limité car utilisant, principalement, comme variables de modélisation des données ou métriques relatives aux objectifs de niveau de service. De plus, trouver l'algorithme d'apprentissage automatique pouvant conduire à une configuration optimale, peut faire perdre considérablement de temps si le nombre de tâche est élevé. Pour différentes tâches ou applications il faudra nécessairement fournir différents algorithmes, étant donné qu'il est probable qu'un algorithme fonctionnant pour une tâche donnée ne fonctionne pas si on l'applique à une tâche différente.

Il en découle, donc, un problème d'adaptabilité de la solution ci-dessus. Par ailleurs, aucune expérience acquise sur des tâches ou applications similaires ou sur des problèmes similaires n'est utilisée dans le processus de surveillance enseigné par ce document.

### EXPOSÉ DE L'INVENTION

L'invention vise à remédier à tout ou partie des inconvénients de l'état de la technique identifié ci-dessus et notamment de proposer un mécanisme automatique qui surveille l'ensemble des serveurs qui composent une chaîne de liaison et qui par analyse des métriques permet d'élaborer, par anticipation, des propositions de redimensionnement de la chaîne de liaison en rapport avec la charge applicative.

Ainsi le système de surveillance des performances d'infrastructures informatiques permet d'anticiper les ajustements d'infrastructure nécessaires pour accélérer la réponse aux incidents entrainant une dégradation voire une interruption des services délivrés par l'application.

Ce but est atteint par un système de surveillance des performances d'infrastructures informatiques, lorsqu'une application est utilisée en production sur une infrastructure informatique comprenant, notamment, des ressources définissant une architecture informatique cible formant une représentation schématique des interactions entre les différents composants d'architecture d'un sous-périmètre donné dite chaîne de liaison, afin d'anticiper les ajustements d'infrastructure nécessaires pour accélérer la réponse aux incidents entraînant une dégradation, voire une interruption des services délivrés par l'application, le système étant caractérisé en ce qu'il comporte:
- des sondes associées à chaque ressource pour remonter les informations de mesure (métriques) représentant l'utilisation des ressources caractérisé ;
- des moyens de mémorisation des informations remontant des sondes, associés à des moyens de traitement de ces informations constituant un module d'historisation de ces informations ;
- des seconds moyens de traitement de ces informations pour définir un module d'historisation des réponses apportées aux problèmes par le système de surveillance et des seconds moyens de mémorisation des réponses aux problèmes détectés ;
- au moins un moteur de règles permettant, à partir du croisement des informations recueillies et stockées dans la mémoire, d'enregistrer les informations remontant des sondes, des indicateurs SLOI des objectifs de niveau de service SLO (Service Level Objectives), des règles mémorisées de scalabilité (SCAL), la définition des seuils d'acceptabilité (SAi) mémorisés dans une mémoire dédiée à l'enregistrement des seuils, des bonnes pratiques mémorisées dans une mémoire dédiée à l'enregistrement des définitions des bonnes pratiques et des périodes d'activité mémorisées dans une mémoire permettant l'enregistrement et la définition des périodes d'analyse et d'établir des corrélations entre ces informations afin d'anticiper l'évolution de la consommation des ressources à au moins une échéance donnée, pour en tenir compte et définir des propositions de redimensionnement de la chaîne de liaison en rapport avec la charge applicative qu'elle supporte ou qu'elle va supporter.

Selon une autre particularité, les ressources sondées sont chaque instance de cluster, chaque cache applicatif, chaque taille des files JMS/JDBC en plus du processeur, des entrées/sorties, et de la mémoire.

Selon une autre particularité, lors des corrélations, le système de surveillance compare les données issues des tests de performance mémorisés dans la mémoire SCAL et génère un nouveau référentiel de données qui remplacera les données initialement ou précédemment enregistrées dans la mémoire SCAL, en prenant en compte ces nouvelles données, le système de gestion des règles modifiera les règles de scalabilité en conséquence pour permettre le redimensionnement de l'infrastructure.

Selon une autre particularité, l'évolution de la consommation des ressources tient compte de l'historisation des résultats et des informations de tendance d'utilisation UT, cette information étant également prise en compte pour anticiper la demande et générer les commandes de redimensionnement de l'infrastructure.

Selon une autre particularité, l'activité d'au moins un jour défini est mémorisée comme « supérieure » avec éventuellement un paramètre indicatif du pourcentage par rapport à un autre jour défini dont l'activité considérée comme « normale » est enregistrée dans les informations de période d'activité et que ces informations sont également prise en compte pour anticiper la demande et générer les commandes de redimensionnement de l'infrastructure.

Selon une autre particularité, le niveau de qualité global est déterminé via le moteur de règles en effectuant la moyenne de l'ensemble des niveaux de respect des objectifs (pourcentage SAi par rapport à la cible) pondérés pour chaque niveau de respect des objectifs par le degré mémorisé (CRAi), d'importance des objectifs considérés d'un point de vue impact opérationnel.

Selon une autre particularité, le niveau de qualité global est déterminé via le moteur de règles qui comporte des règles mémorisées concernant les métriques utilisées sur les ressources (ex: CPU) et leur niveau en pourcentage de respect des objectifs.

Selon une autre particularité, les règles peuvent combiner une ou plusieurs métriques et également un intervalle de temps mémorisé dans une mémoire dédiée à l'enregistrement des durées.

Selon une autre particularité, au moins une règle permet d'accepter un dépassement de 10% des temps de traitements sur une période d'une heure par exemple.

Selon une autre particularité, la liste mémorisée des indicateurs de SLO (Service Level Objectives) dépend de la ou des applications qui sont surveillées.

Selon une autre particularité, chaque liste mémorisée des indicateurs de SLO (Service Level Objectives) est associée à une application et comporte des éléments de ressource qu'on retrouve à chaque fois (CPU, Mémoire, etc) et d'autres qui sont spécifiques à l'application (nombre de fichiers ouverts, nombre process, etc.).

Selon une autre particularité, chaque seuil d'acceptabilité (SAi) est associé à au moins une règle permettant de déterminer des propositions d'évolutions appropriées de la chaîne applicative et le dépassement du seuil déclenche l'exécution de la règle.

Selon une autre particularité, l'invention comporte un portail permettant de suivre les incidents et le résultat des actions générées.

Selon une autre particularité, la saisonnalité, ainsi que la tendance d'utilisation UT (utilization trend) déterminée par calcul à partir de l'historisation des métriques mémorisées est prise en compte pour d'influer sur le moteur de règles et plus particulièrement sur les règles de dimensionnement des différents serveurs composant l'infrastructure.

Selon une autre particularité, pour une application donnée, si le moteur de règles déduit de l'analyse des métriques et de la saisonnalité que le système doit pouvoir supporter à une échéance donnée un doublement de la charge lié aux traitements utilisateurs, la règle du moteur de règles déterminera l'ajout de certaines quantités de ressources (CPU, mémoire, instance de cluster, cache applicatif, taille des files JMS (Java Message Service) /JDBC (Java DataBase Connectivity,...) sur tel et/ou tel serveur (présentation, métier, persistance) et générera les ordres correspondants.

Selon une autre particularité, il comporte une première Interface Homme Machine (IHM1) permettant de définir l'architecture informatique cible [serveurs (présentation, métier, persistance), composants CPU, mémoire entrée/sortie, réseau] constituant les ressources du système d'exploitation.

Selon une autre particularité, il comporte une deuxième Interface Homme Machine (IHM2) permettant de définir les sondes qui remontent les métriques provenant de l'utilisation des ressources, ainsi que les seuils de respect des objectifs associé à chaque sonde.

Selon une autre particularité, il comporte un module permettant en association avec une IHM5 la mise à jour des règles.

Selon une autre particularité, l'IHM2 permet de définir la surveillance d'éléments génériques à toutes les applications (charges, % occupations des ressources, temps de réponse, temps de traitement, Niveau d'utilisation CPU, Niveau de lecture disque, Niveau d'écriture disque, etc.) et comporte des commandes d'affichage permettant de sélectionner ces éléments et activer, dans le système de surveillance, le code nécessaire pour faire effectuer dans l'architecture informatique les mesures par les sondes permettant de surveiller ces éléments génériques.

Selon une autre particularité, l'IHM2 permet de définir la surveillance d'éléments très spécifiques détectés lors de tests de performance en charge de l'application sur une infrastructure de tests, ces éléments spécifiques correspondant, par exemple: au nombre de fichier ou de port ouvert, de files JDBC ou JMS, au taux d'occupation du file system, au taux de fonctionnement du ramasse miettes ou récupérateur de mémoires (garbage collector) pour les applications J2EE,...et comporte des commandes d'affichage permettant de sélectionner ces éléments et activer, dans le système de surveillance, le code nécessaire pour faire effectuer dans l'architecture informatique, les mesures par les sondes permettant de surveiller ces éléments très spécifiques.

Selon une autre particularité, une interface IHM3 permet de définir des périodes d'analyses pour les sondes, ces périodes permettant de dissocier les traitements applicatifs en fonction de leur criticité (ex: traitement batch vs traitements transactionnels) ou encore de tenir compte de la saisonnalité du cycle de vie de l'application (période de clôture ou d'activité normale) et comporte des moyens permettant d'associer ces périodes d'analyse à chacune des sondes en fonction de l'application qu'elles doivent surveiller.

### BRÈVE DESCRIPTION DES FIGURES

D'autres caractéristiques et avantages de l'invention ressortiront à la lecture de la description qui suit, en référence aux figures annexées, qui illustrent :

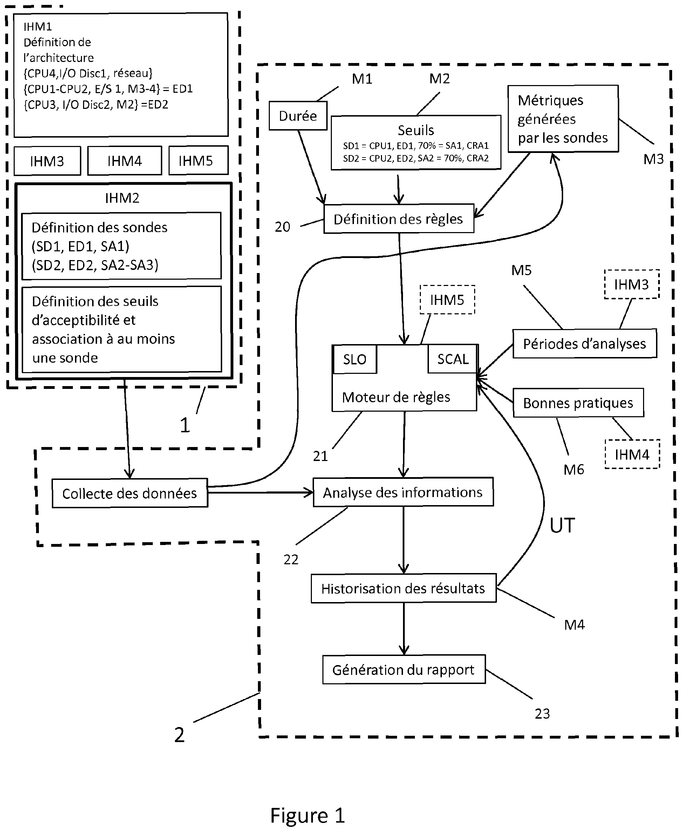

La figure 1, une vue schématique des éléments du système de surveillance selon un mode de réalisation de l'invention.

Pour plus de clarté, les éléments identiques ou similaires sont repérés par des signes de référence identiques sur l'ensemble des figures.

### DESCRIPTION DÉTAILLÉ D'UN MODE DE REALISATION DE L'INVENTION

Un exemple de réalisation de l'invention est illustré à la figure 1 et cet exemple représente dans la surface délimitée par la ligne pointillée (2), l'architecture d'un module logiciel s'exécutant sur une structure informatique pour constituer un module logiciel et structurel effectuant la surveillance des performances d'infrastructures informatiques lorsqu'une application est utilisée en production sur une infrastructure informatique. Ce module (2) ou système de surveillance, est exécuté par au moins une des unités de traitement appartenant à l'infrastructure informatique surveillée par le module. La surface rectangulaire (1) représente le module logiciel exécuté par une infrastructure informatique pour former un module logiciel et structurel permettant d'assurer l'évolution du système (2) de surveillance des performances.

Ce module (1) logiciel et structurel, permettant d'assurer l'évolution du système (2) de surveillance, comporte donc un premier agencement (par exemple, IHM1) exécutée sur un des équipements informatique de la structure avec les ressources nécessaires, pour permettre (par exemple, à l'utilisateur) de définir l'architecture informatique sur laquelle est surveillée une application et notamment les ressources utilisées pour délivrer les services fournis par cette application.

Cette architecture informatique peut comprendre une pluralité de processeurs, des entrées-sorties, des mémoires, une ou plusieurs instances de clusters, un ou plusieurs caches applicatifs, ainsi que la taille des files JMS/JDBC. Le premier agencement permet donc, éventuellement, de visualiser sur un écran des icones ou des messages représentatifs de ces éléments et surtout par un élément interactif avec l'équipement informatique de sélectionner un ou plusieurs équipements. Un module de liaison et d'activation exécuté suite à cette sélection permet ensuite de générer et envoyer les ordres permettant de relier entre eux les différents éléments sélectionnés pour constituer la structure mémorisée, par exemple sous la forme {CPU1-CPU2, E/S2, M3-4} pour indiquer que les processeur 1 et 2 peuvent exécuter en parallèle l'application en recevant des informations de l'Entrée/Sortie 2 et en utilisant les Mémoires 3 et 4 en lecture et écriture. Puis chaque élément est rendu actif pour qu'il contribue à l'infrastructure informatique assurant la mise en oeuvre des services délivrés par une ou plusieurs applications s'exécutant sur cette infrastructure. La sélection et l'activation dans un mode de réalisation peut s'effectuer automatiquement par le module logiciel utilisant une base de donnée comportant toutes les configurations possibles et toutes les actions à envisager pour chaque configuration. Ce module est apte à envoyer toutes les requêtes nécessaires pour déterminer la configuration de l'infrastructure dans laquelle il s'exécute.

Dans un autre mode de réalisation, la sélection et l'activation s'effectue par l'utilisation d'une interface homme-machine (IHM) par l'utilisateur. Par le vocable interface homme-machine, on entend tout élément permettant à un être humain de dialoguer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran.

Un autre exemple de réalisation d'IHM est un écran tactile permettant de sélectionner directement sur l'écran les éléments touchés par le doigt et éventuellement avec la possibilité d'afficher un clavier virtuel. Un deuxième exemple de réalisation est l'utilisation d'une caméra enregistrant les déplacements de l'oeil de l'utilisateur et utilisant ces informations pour mettre en surbrillance l'élément pointé par l'oeil de l'utilisateur et un mouvement supplémentaire de l'oeil ou de la tête ou d'une partie du corps ou un actionnement d'une touche, ou l'effleurement d'une zone de l'écran validant la sélection ainsi faite.

Un autre exemple d'interface homme-machine peut être une commande vocale permettant d'afficher des éléments et ensuite de valider la sélection d'un élément. Ces exemples étant purement illustratifs, mais non limitatifs des solutions possibles dans l'avenir pour sélectionner des éléments et les déclarer au module d'activation et de liaison pour que ce dernier remplisse sa tache et constitue l'infrastructure informatique.

Le module (1) logiciel et structurel, permettant d'assurer l'évolution du système (2) de surveillance, comporte également un deuxième agencement, par exemple IHM2 permettant de définir les sondes qui vont permettre de surveiller les différents éléments de l'infrastructure informatique et de recueillir des métriques, c'est-à-dire des informations de mesures représentant l'utilisation ou l'état des ressources. Ce deuxième agencement après avoir créé en mémoire une association entre une sonde définie (SD) et un équipement déterminé (ED) permettra également de définir un ou plusieurs seuils d'acceptabilité (SA) pour chacune des métriques et d'associer ce ou ces seuils d'acceptabilité à au moins chaque sonde par une information (SD, ED, SA) mémorisée pour chaque sonde. Cet agencement permet aussi d'associer à chaque seuil d'acceptabilité (SA) défini pour une sonde, une information représentative de la criticité associée (CRA) au seuil. Ces seuils SA1, SA2, SAi,....et les criticités associées CRA1, CRA2, CRAi, ...sont ensuite enregistrés dans une mémoire (M2) du système (2) de surveillance en association avec l'identité SD1 de la sonde et celle de l'équipement associé, par exemple (SD1= CPU1).

Voici quelques exemples :
Niveau d'utilisation CPU, 60 %, Criticité 1.
Niveau d'utilisation CPU, 70 %, Criticité 2.
Niveau d'utilisation CPU, 80 %, Criticité 3.
(Niveau de lecture disque, 4 Mo/s) & (Niveau d'écriture disque, 4 Mo/s), Criticité 2
(Niveau de lecture disque, 5 Mo/s) & (Niveau d'écriture disque, 3 Mo/s), Criticité 2

Ces deux agencements, par exemple mis en oeuvre sous forme d'interfaces IHM1 et IHM2, servent en fait à configurer le système (2) de surveillance et à adapter celui-ci à l'architecture informatique définie, puis à faire évoluer la structure ou la prise en compte des métriques en fonction des spécificités de l'application.

Le module (2) logiciel et structurel de surveillance des performances comporte une autre mémoire (M1) qui enregistrera les durées et une troisième mémoire M3 qui enregistrera les métriques générées par les sondes.

Les informations provenant de ces trois mémoires M1, M2, M3 seront exploitées par un module (20) de définition de règles exécuté sur un des éléments de l'infrastructure informatique. Ces règles sont ensuite enregistrées et mises en oeuvre dans un moteur de règles prenant en compte les objectifs de niveau de services ou les objectifs de scalabilité du système. Les règles sont définies, par exemple à l'aide d'une interface IHM5 ou d'un module de traitement automatique. Ces règles incorporées dans le moteur (21) de règles tiendront également compte d'informations venant de mémoires supplémentaires, (par exemple M5, M6). Une première mémoire supplémentaire (M5) permet de mémoriser et définir les périodes d'analyse à l'aide, par exemple, d'une troisième interface IHM3, et une autre mémoire supplémentaire (M6) permet de mémoriser les définitions des bonnes pratiques. Chacune de ces mémoires est initialisée au départ soit par l'utilisation d'un module de traitement automatique soit par l'utilisation d'une IHM spécifique (IHM3, IHM4). L'une, IHM3, permet la définition des périodes d'analyse, l'autre, IHM4, permet la définition des bonnes pratiques, comme représenté par la liaison entre IHM3 et M5 et la liaison entre IHM4 et M6.

Lors de tests de performance, il est possible de déterminer les règles de scalabilité de l'application en fonction de la charge qui va lui être appliquée. Ces règles permettent de définir, en fonction de la charge attendue, quels sont les types d'évolutions à réaliser sur les différents serveurs pour garantir le bon niveau de SLO.

Par exemple, pour une application, si on veut pouvoir supporter un doublement de la charge liée aux traitements utilisateurs, il faut ajouter telle quantité de ressources (CPU, mémoire, instance de cluster, cache applicatif, taille des files JMS/JDBC,...) sur tel et/ou tel serveur (présentation, métier, persistance).

Ces règles de scalabilité, ainsi préalablement déterminées lors des tests de performance de l'application, seront mémorisées et utilisées par le moteur (21) de règle pour pouvoir calculer le bon niveau de dimensionnement et les ajustements de l'architecture informatique en fonction de la charge à supporter.

Les données collectées par les sondes sont envoyées à un module (22) d'analyse des informations collectées. De plus les règles définies par le module (2) sont appliquées à un module moteur (21) de règles pour générer des commandes d'adaptation et d'ajustement de l'architecture informatique en fonction des données collectées et des informations représentatives de l'historisation des métriques délivrée par la mémoire (M3) des métriques sondes. Ces ajustements sont enregistrés dans un module (M4) de mémorisation servant à l'historisation des résultats. Ce module (M4) d'historisation des résultats exécute des calculs pour générer des informations de tendances d'utilisation (UT) qui sont envoyées au moteur (21) de règle pour les utiliser dans l'exécution des règles par le moteur (21) pour générer des commandes d'adaptation et d'ajustement de l'architecture informatique en fonction des données collectées et de la tendance d'utilisation.

Ensuite un portail (23) permettra d'afficher les incidents et les actions générés et de générer un rapport.

On comprend ainsi que par la multiplicité des éléments surveillés et des informations provenant des sondes, ainsi que les différents seuils d'acceptabilité définis pour éventuellement chacun des évènements ou des niveaux d'incidents ou de dysfonctionnements détectés, le moteur (21) de règles élaborera des ajustements qui seront multiples et variés et notamment en tenant compte des corrélations ou croisements entre d'une part les informations représentatives des métriques mémorisées en M3 et d'autre part celles représentatives de l'expérience acquise constituée par l'historisation des résultats précédents mémorisés dans la mémoire M4 et aussi en prenant en compte, dans une autre variante de réalisation, des croisements avec les informations représentatives des périodes d'analyse mémorisées dans la mémoire supplémentaire des périodes d'analyses M5 avec celles des mémoires M3, M4 ou encore celles représentatives des bonnes pratiques provenant de la mémoire supplémentaire M6 de définition des bonnes pratiques, avec celles des mémoires M3 de métriques sondes, M4 d'historisation des résultats d'ajustement, ou M5.

Ainsi le système (2) de surveillance des performances d'infrastructures informatiques permet, notamment par les informations de tendance d'utilisation UT provenant de l'historisation des résultats et l'évolution des seuils de criticité, d'anticiper les ajustements d'infrastructure nécessaires pour accélérer la réponse aux incidents entrainant une dégradation voire une interruption des services délivrés par l'application.

Les applications sont constituées d'un certain nombre d'actes métiers. À chaque acte métiers correspond une consommation de ressources spécifiques (I/O disques ou réseau, consommation CPU, etc). Il est alors possible de faire une corrélation entre le niveau d'utilisation d'une ressource et le niveau de consommation de ressources tel que par exemple la consommation de CPU. Si dans certains cas, il n'est pas possible d'avoir une vision précise du niveau d'utilisation de la ressource, on peut alors faire un lien de corrélation parfois entre le volume en entrée (débit réseau, nombre de requêtes..) et le niveau d'utilisation des ressources.

### Présentation de l'intérêt de l'invention

Ainsi comme on peut le comprendre l'invention est un mécanisme évolutif et automatique qui surveille l'ensemble des serveurs qui composent une chaîne de liaison.

Les éléments qui sont surveillés peuvent être génériques à toutes les applications (charges, % occupations de ressources, temps de réponse, temps de traitement, etc.), mais aussi par les possibilités d'évolutivité permise par les interfaces d'autres éléments très spécifiques qui peuvent être prises en compte après avoir été détectés lors de tests de performance en charge de l'application (nombre de fichier ou de port ouvert, file JDBC ou JMS, taux d'occupation du file system, fonctionnement de garbage collector pour les applications J2EE,...).

À chaque élément surveillé est associé à un ou plusieurs seuils d'acceptabilité. Chaque seuil peut correspondre à un niveau de criticité. Les seuils et leur criticités peuvent également être une combinaison d'éléments surveillés.

Voici quelques exemples :
Niveau d'utilisation CPU, 60 %, Criticité 1.
Niveau d'utilisation CPU, 70 %, Criticité 2.
Niveau d'utilisation CPU, 80 %, Criticité 3.
(Niveau de lecture disque, 4 Mo/s) & (Niveau d'écriture disque, 4 Mo/s), Criticité 2
(Niveau de lecture disque, 5 Mo/s) & (Niveau d'écriture disque, 3 Mo/s), Criticité 2

Afin de pouvoir automatiser la réaction face au dépassement d'un seuil d'acceptabilité, chaque seuil est associé à des règles permettant de déterminer des propositions d'évolutions appropriées de la chaîne applicative.

Ces règles sont définies à partir de la combinaison de seuils, de métriques liées à l'utilisation des ressources, et de la durée de non-respect du niveau de qualité globale de service de l'application.

Cela peut être :
Un dépassement de niveau de consommation ressource (CPU>70%) sur un intervalle (5 min dans l'heure),

Ou encore 10% temps de traitements de l'acte métier X supérieur à 10 s,

Ou une combinaison de plusieurs seuils de niveau d'utilisation des I/O disque sur la machine X et Y qui partage le même espace de stockage.

Des périodes d'analyses seront définies afin de dissocier les traitements applicatifs en fonction de leur criticité (ex traitement batch vs traitements transactionnels) ou encore de tenir compte de la saisonnalité, du cycle de vie de l'application (période de clôture ou d'activité normale). Cette saisonnalité, ainsi que l'information représentative de la tendance « trend d'utilisation » (issue d'un calcul à partir des informations représentant l'historisation des métriques) peuvent influer sur le moteur (21) de règles et plus particulièrement sur les règles de dimensionnement des différents serveurs composant l'infrastructure.

Imaginons une application bancaire (cas réel) avec une saisonnalité de son utilisation. En fin/début de mois, les clients effectuent la majorité de leurs transactions pour régler leur facture. Cela correspond à des actes métiers précis qui consomment des ressources spécifiques. Le dimensionnement de la chaîne applicative doit utiliser alors les règles spécifiques à cette période d'utilisation

En fonction de la saison dans laquelle va entrer l'application, sa charge (nature et volume) va évoluer et sa consommation de ressources en conséquence.

Les règles utilisées dans le dimensionnement de l'infrastructure doivent donc ternir compte de l'évolution de la consommation de ressources en fonction de la saison.

Afin de rendre systémique l'analyse des métriques d'utilisation des ressources et la réponse aux problèmes, l'invention permet de générer un rapport présentant à partir du croisement des informations recueillies, des SLO mémorisées et des règles de scalabilité issues de la phase de test de performance de l'application et enregistrées dans un moteur (21) de règles, des propositions de redimensionnement de la chaîne de liaison en rapport avec la charge applicative qu'elle supporte.

L'intérêt du croisement est le suivant: prenons le cas d'une application dont la mise en service se fait par vague successive. Cette application a fait l'objet de tests de performance qui ont permis de déterminer les règles de scalabilité (SCAL) de l'application pour un certain nombre d'actes métiers (une minorité, mais des actes jugés critiques). Lors des premières vagues de déploiement de l'application, le système (2) de surveillance va pouvoir croiser et comparer les données issues des tests de performance mémorisées dans la mémoire SCAL avec celles observées en production et mémorisées par l'historisation des métriques. Il y aura forcément des écarts, car les tests de performance sont faits sur la base de quelques scénarios (actes métiers). Cette analyse croisée permet de disposer d'un nouveau référentiel de performance plus réaliste qui se substituera aux informations de la mémoire SCAL initialement ou précédemment enregistrées et qui va influer sur les règles de scalabilité de l'application puisque les consommations de ressources attendues diffèrent. Le système de gestion des règles modifiera les règles de scalabilité en conséquence pour pouvoir déterminer l'infrastructure qui sera nécessaire pour la vague suivante.

Les redimensionnements peuvent se faire à la hausse comme à la baisse ce qui permet dans ce dernier cas d'optimiser l'utilisation des ressources du parc informatique.

À titre d'exemple illustratif et non limitatif, le redimensionnement peut se faire par une règle consistant à ajouter une instance dans le cluster X et dans le cluster Y sur la machine XX et YY et ajouter un CPU sur la machine YY et 2 Go de RAM sur la machine XX.

L'objectif de ces évolutions est d'optimiser l'infrastructure de la chaîne de liaison en prenant en compte globalement l'ensemble des composants du système d'information. Cette invention peut rentrer dans le cadre d'un processus d'amélioration continue de la qualité de service et de la gestion des ressources du parc informatique.

Un exemple d'intégration d'un moteur (21) de règles dans le système (2) de surveillance est réalisé comme suit.

Une entreprise souhaite mettre en place un nouveau logiciel de comptabilité. Le déploiement du logiciel peut commencer avec un département pilote comprenant 100 utilisateurs. Le département comprend des équipes, par exemple, 10 équipes. Progressivement, le périmètre sera étendu aux autres départements chaque mois par exemple. L'activité du département en journée du lundi au jeudi est « normale ». Une activité est dite « normale » quand il n'y a pas de traitements spécifiques. Chaque vendredi, les responsables de chaque équipe utilisent un module du système de surveillance, par exemple un portail (23), pour générer un rapport qui indique le bilan de la semaine écoulée. L'activité d'au moins un jour défini (par exemple le vendredi) est mémorisée comme « supérieure » avec éventuellement un paramètre indicatif du pourcentage par rapport à une activité dite « normale » enregistrée pour un autre jour défini (par exemple, le lundi) dans les informations de période d'activité. Ces informations sont également prises en compte pour anticiper la demande et générer les commandes de redimensionnement de l'infrastructure.

Ce rapport peut être mémorisé dans la mémoire M4 sous forme d'un fichier PDF. Ce fichier PDF peut être imprimé par un moyen d'impression. À la fin de chaque mois, le responsable du département utilise un module du système (2) de surveillance, par exemple un portail (23), pour générer un rapport qui indique le bilan du mois écoulé. Ce rapport peut être mémorisé dans la mémoire M4 sous forme d'un fichier PDF. Ce fichier PDF peut être imprimé par un moyen d'impression.

En parallèle, des traitements batch sont exécutés durant la nuit.

Avant la mise en place du logiciel, des règles de scalabilité sont préalablement déterminés lors de tests de performance de l'application.

Dans ces tests de performance, différents tirs sont réalisés. Les tirs représentent des simulations d'utilisation du système (2) de surveillance. Cette simulation peut être réalisée par un module de modélisation qui génère des signaux qui correspondent à des utilisations d'un logiciel selon un scénario particulier.

Pour un tir d'une activité standard, le module de simulation simule l'utilisation de 100, 200, 400 et 800 personnes par exemple.

Ainsi, ce tir permettra de déterminer que, par exemple :
pour 100 utilisateurs, 10% du CPU et 1 Go de mémoire sont utilisés,
pour 200 utilisateurs, 20% du CPU et 1,2 Go de mémoire sont utilisés,
pour 400 utilisateurs, 40% du CPU et 1,4 Go de mémoire sont utilisés,
pour 800 utilisateurs, 80% du CPU et 1,8 Go de mémoire sont utilisés.

Pour un tir qui correspond à une génération d'une impression du rapport de la semaine écoulée, le module de simulation simule l'utilisation de 10, 20, 40 et 80 personnes par exemple.

Ainsi, ce tir permettra de déterminer que, par exemple :
pour 10 responsables d'équipe, 5% du CPU et 1 Go de mémoire sont utilisés,
pour 20 responsables d'équipe, 10% du CPU et 1 Go de mémoire sont utilisés,
pour 40 responsables d'équipe, 20% du CPU et 1 Go de mémoire sont utilisés,
pour 80 responsables d'équipe, 40% du CPU et 1 Go de mémoire sont utilisés.
Pour un tir qui correspond à une génération d'une impression du rapport du mois écoulé, le module de simulation simule l'utilisation de 1, 2, 4 et 8 personnes par exemple.

Ainsi, ce tir permettra de déterminer que, par exemple :
pour 1 responsable de département, 15% du CPU et 1,5 Go de mémoire sont utilisés,
pour 2 responsables de département, 30% du CPU et 3 Go de mémoire sont utilisés,
pour 4 responsables de département, 45% du CPU et 4,5 Go de mémoire sont utilisés,
pour 8 responsables de département, 60% du CPU et 6 Go de mémoire sont utilisés.

Pour un tir nominal qui correspond à une combinaison des tirs précédents, le module de simulation simule l'utilisation de 100 personnes utilisateur du logiciel, de 10 responsables d'équipe pour la génération d'une impression du rapport de la semaine écoulée et d'un responsable de département pour la génération d'une impression du rapport du mois écoulé.

Ainsi, ce tir permettra de déterminer que, par exemple :
30% du CPU et 3,5 Go de mémoire sont utilisés.

Pour un tir qui correspond à un traitement batch, le module de simulation simule une augmentation, par exemple, de 1 fois, 2 fois, 4 fois et 8 fois la charge de la base de données. Ces augmentations peuvent être des prévisions d'augmentation des données dans les prochaines années.

Ainsi, ce tir permettra de déterminer que, par exemple :
pour une charge multipliée par 1, 15% du CPU et 7 Go de mémoire sont utilisés,
pour une charge multipliée par 2, 30% du CPU et 14 Go de mémoire sont utilisés,
pour une charge multipliée par 4, 45% du CPU et 21 Go de mémoire sont utilisés,
pour une charge multipliée par 8, 60% du CPU et 28 Go de mémoire sont utilisés.

Avec les informations obtenues par les tirs, le moteur (21) de règles est capable de commencer à générer des informations relatives à des tendances d'utilisation en fonction de l'augmentation de l'activité (augmentation du nombre d'utilisateurs ou du nombre de responsables d'équipe ou de département), ou l'augmentation du volume de données dans la base de données.

Une fois le logiciel en production, le moteur (21) de règles est capable d'ajuster les différentes tendances en fonction des mesures observées en temps réel, c'est-à-dire, pour une utilisation réelle du logiciel. Les mesures observées peuvent être éventuellement différentes aux mesures réalisées pendant les tirs de simulation des tests de performance. Par exemple, on peut observer que le comportement des utilisateurs change quand ils maîtrisent le logiciel provoquant ainsi une empreinte différente dans le système (2) de surveillance.

Concrètement, si l'entreprise souhaite déployer le logiciel de comptabilité en plus du département de 100 personnes à 3 autres départements sur une infrastructure avec un serveur (1 CPU et 8 Go de RAM). Il y aura donc 400 utilisateurs, 40 responsables d'équipes et 4 responsables de département.

D'après les tirs de simulation, avec 400 utilisateurs, pour une activité standard, 40% du CPU et 1,4 Go de mémoire sont utilisés. Pour une génération par 40 responsables d'équipes d'une impression du rapport de la semaine écoulée, 20% du CPU et 1 Go de mémoire sont utilisés. Pour une génération par 40 responsables d'équipes d'une impression du rapport de la semaine écoulée, 20% du CPU et 1 Go de mémoire sont utilisés. Pour une génération par 4 responsables de département d'une impression du rapport de la semaine écoulée, 45% du CPU et 4,5 Go de mémoire sont utilisés.

Le moteur (21) de règles sera capable de déterminer les ressources nécessaires en fonction de l'usage actuel du logiciel, des seuils d'acceptabilité (SAi). Par exemple, le moteur (21) de règles peut décider qu'un CPU supplémentaire doit être utilisé pour l'usage de l'application et qu'un ajout de mémoire est nécessaire si le seuil de 80% d'utilisation de la mémoire est atteint.

Le moteur (21) de règles est aussi capable de déterminer une tendance, mais aussi d'anticiper les besoins de ressources pour une période donnée. Par exemple dans notre cas, pour la chaîne de nuit pendant laquelle le traitement batch est réalisé, ou bien pour l'activité des vendredis, le moteur (21) de règle anticipe les besoins de ressources pendant ces périodes tout en respectant les seuils d'acceptabilité (SAi) et des niveaux de criticité fixés (CRA).

On comprend ainsi que l'invention, en fonction des circonstances, de l'irrégularité et de la saisonnalité des demandes, peut anticiper les ajustements d'infrastructure nécessaires pour accélérer la réponse aux incidents qui auraient pu entrainer une dégradation voire une interruption des services délivrés.

L'invention n'est pas limitée aux modes de réalisation précédemment décrits à titre d'exemple et des variantes de réalisation correspondant au cadre défini par les revendications pourraient être envisagées sans sortir du cadre de l'invention.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système (2) de surveillance des performances d'infrastructures informatiques, lorsqu'une application est utilisée en production sur une infrastructure informatique comprenant, notamment, des ressources définissant une architecture informatique cible formant une représentation schématique des interactions entre les différents composants d'architecture d'un sous-périmètre donné dite chaîne de liaison, afin d'anticiper les ajustements d'infrastructure nécessaires pour accélérer la réponse aux incidents entraînant une dégradation, voire une interruption des services délivrés par l'application, le système étant **caractérisé en ce qu'**il comporte :
- des sondes associées à chaque ressource pour recueillir et remonter les informations de mesure (métriques) représentant l'utilisation des ressources ;
- des moyens (M3) de mémorisation des informations remontant des sondes, associés à des moyens de traitement de ces informations constituant un module d'historisation de ces informations ;
- des seconds moyens (22) de traitement de ces informations pour définir un module (M4) d'historisation des réponses apportées aux problèmes par le système (2) de surveillance et des seconds moyens de mémorisation des réponses aux problèmes détectés;
- au moins un moteur (21) de règles permettant, à partir du croisement des informations recueillies et stockées dans la mémoire (M3) enregistrant les informations remontant des sondes, des indicateurs (SLOI) des objectifs de niveau de service (SLO: Service Level Objectives),
des règles mémorisées de scalabilité (SCAL), de la définition des seuils d'acceptabilité (SAi) mémorisés dans une mémoire (M2) dédiée à l'enregistrement des seuils, des bonnes pratiques mémorisées dans une mémoire (M6) dédiée à l'enregistrement des définitions des bonnes pratiques et des périodes d'activité mémorisées dans une mémoire (M5) permettant l'enregistrement et la définition des périodes d'analyse, d'établir des corrélations entre ces informations afin d'anticiper l'évolution de la consommation des ressources à au moins une échéance donnée, pour en tenir compte et définir des propositions de redimensionnement de la chaîne de liaison en rapport avec la charge applicative qu'elle supporte ou qu'elle va supporter.

2. Système (2) de surveillance des performances d'infrastructures informatiques selon la revendication 1, **caractérisé en ce que**, les ressources sondées sont chaque instance de cluster, chaque cache applicatif, chaque taille des files JMS (Java Message Service) / JDBC (Java Database Connectivity) en plus du processeur, des entrées/sorties, et de la mémoire.

3. Système (2) de surveillance des performances d'infrastructures informatiques selon la revendication 1 ou 2, **caractérisé en ce que**, lors des corrélations, le système (2) de surveillance compare les données issues des tests de performance mémorisés dans la mémoire (M3) et génère un nouveau référentiel de données qui remplacera les données initialement ou précédemment enregistrées dans la mémoire (M3), en prenant en compte ces nouvelles données, le système de gestion des règles modifiera les règles de scalabilité en conséquence pour permettre le redimensionnement de l'infrastructure.

4. Système (2) de surveillance des performances d'infrastructures informatiques selon une des revendications 1 à 3, **caractérisé en ce que** l'évolution de la consommation des ressources tient compte de l'historisation des résultats et des informations de tendance d'utilisation (UT), cette information étant également prise en compte pour anticiper la demande et générer les commandes de redimensionnement de l'infrastructure.

5. Système (2) de surveillance des performances d'infrastructures informatiques selon une des revendications 1 à 4, caractérisé en ce l'activité d'au moins un jour défini est mémorisée comme « supérieure » avec éventuellement un paramètre indicatif du pourcentage par rapport à un autre jour défini dont l'activité considérée comme « normale » est enregistrée dans les informations de période d'activité et que ces informations sont également prises en compte pour anticiper la demande et générer les commandes de redimensionnement de l'infrastructure.

6. Système (2) de surveillance des performances d'infrastructures informatiques selon la revendication 1, **caractérisé en ce que** le niveau de qualité global est déterminé via le moteur (21) de règles en effectuant la moyenne de l'ensemble des niveaux de respect des objectifs (pourcentage SAi par rapport à la cible) pondérés pour chaque niveau de respect des objectifs par le degré mémorisé (CRAi), d'importance des objectifs considérés d'un point de vue impact opérationnel.

7. Système (2) de surveillance des performances d'infrastructures informatiques selon la revendication 1 ou 6, **caractérisé en ce que** le niveau de qualité global est déterminé via le moteur (21) de règles qui comporte des règles mémorisées concernant les métriques utilisées sur les ressources (ex: CPU) et leur niveau en pourcentage de respect des objectifs.

8. Système (2) de surveillance des performances d'infrastructures informatiques selon une des revendications 1 à 7, **caractérisé en ce que** les règles peuvent combiner une ou plusieurs métriques et également un intervalle de temps mémorisé dans une mémoire (M1) dédiée à l'enregistrement des durées.

9. Système (2) de surveillance des performances d'infrastructures informatiques selon une des revendications 1 à 8, **caractérisé en ce qu'**au moins une règle permet d'accepter un dépassement de 10% des temps de traitements sur une période d'une heure par exemple.

10. Système (2) de surveillance des performances d'infrastructures informatiques selon une des revendications 1 à 9, **caractérisé en ce que** la liste mémorisée des indicateurs de SLO (Service Level Objectives) dépend de la ou des applications qui sont surveillées.

11. Système (2) de surveillance des performances d'infrastructures informatiques selon une des revendications 1 à 10 **caractérisés en ce que** chaque liste mémorisée des indicateurs de SLO (Service Level Objectives) est associée à une application et comporte des éléments de ressource qu'on retrouve à chaque fois (CPU, Mémoire,...) et d'autres qui sont spécifiques à l'application (nombre de fichiers ouverts, nombre process,...).

12. Système (2) de surveillance des performances d'infrastructures informatiques selon une des revendications 1 à 11, **caractérisé en ce que** chaque seuil d'acceptabilité (SAi) est associé à au moins une règle permettant de déterminer des propositions d'évolutions appropriées de la chaîne applicative et le dépassement du seuil déclenche l'exécution de la règle.

13. Système (2) de surveillance des performances d'infrastructures informatiques selon une des revendications 1 à 12, **caractérisé en ce que** l'invention comporte un portail (23) permettant de suivre les incidents et le résultat des actions générées.

14. Système (2) de surveillance des performances d'infrastructures informatiques selon une des revendications 1 à 13, **caractérisé en ce que** la saisonnalité, ainsi que la tendance d'utilisation (UT) déterminée par calcul à partir de l'historisation des métriques mémorisées est prise en compte pour d'influer sur le moteur (21) de règles et plus particulièrement sur les règles de dimensionnement des différents serveurs composant l'infrastructure.

15. Système (2) de surveillance des performances d'infrastructures informatiques selon une des revendications 1 à 14, **caractérisé en ce que** pour une application donnée, si le moteur (21) de règles déduit de l'analyse des métriques et de la saisonnalité que le système doit pouvoir supporter à une échéance donnée un doublement de la charge lié aux traitements utilisateurs, la règle du moteur (21) de règles déterminera l'ajout de certaines quantités de ressources (CPU, mémoire, instance de cluster, cache applicatif, taille des files JMS (*Java Message Service*) /JDBC (*Java DataBase Connectivity*) sur tel et/ou tel serveur (présentation, métier, persistance) et générera les ordres correspondants.

16. Système (2) de surveillance des performances d'infrastructures informatiques selon une des revendications 1 à 15, **caractérisé en ce qu'**il comporte une première Interface Homme Machine (IHM1) permettant de définir l'architecture informatique cible (serveurs: présentations, métier, persistence; composants CPU; mémoire entrée/sortie, réseau) constituant les ressources du système d'exploitation.

17. Système (2) de surveillance des performances d'infrastructures informatiques selon une des revendications 1 à 16, **caractérisé en ce qu'**il comporte une deuxième Interface Homme Machine (IHM2) permettant de définir les sondes qui remontent les métriques provenant de l'utilisation des ressources, ainsi que les seuils de respect des objectifs associé à chaque sonde.

18. Système (2) de surveillance des performances d'infrastructures informatiques selon une des revendications 1 à 17, **caractérisé en ce qu'**il comporte un module permettant en association avec une interface (IHM5) la mise à jour des règles.

19. Système (2) de surveillance des performances d'infrastructures informatiques selon une des revendications 1 à 18, **caractérisé en ce que** la deuxième Interface Homme Machine (IHM2) permet de définir la surveillance d'éléments génériques à toutes les applications (charges, % occupations des ressources, temps de réponse, temps de traitement, Niveau d'utilisation CPU, Niveau de lecture disque, Niveau d'écriture disque,...) et comporte des commandes d'affichage permettant de sélectionner ces éléments et activer, dans le système (2) de surveillance, le code nécessaire pour faire effectuer dans l'architecture informatique les mesures par les sondes permettant de surveiller ces éléments génériques.

20. Système (2) de surveillance des performances d'infrastructures informatiques selon une des revendications 1 à 19 **caractérisé en ce que** la deuxième Interface Homme Machine (IHM2) permet de définir la surveillance d'éléments très spécifiques, détectés lors de tests de performance en charge de l'application sur une infrastructure de tests, ces éléments spécifiques correspondant, par exemple: au nombre de fichier ou de port ouvert, de files JDBC ou JMS, au taux d'occupation du file system, au taux de fonctionnement du ramasse-miettes ou récupérateur de mémoires (*garbage collector*) pour les applications J2EE,...et comporte des commandes d'affichage permettant de sélectionner ces éléments et activer, dans le système (2) de surveillance, le code nécessaire pour faire effectuer dans l'architecture informatique, les mesures par les sondes permettant de surveiller ces éléments très spécifiques.

21. Système (2) de surveillance des performances d'infrastructures informatiques selon une des revendications 1 à 20, **caractérisé en ce qu'**une troisième Interface Homme Machine (IHM3) permet de définir des périodes d'analyses pour les sondes, ces périodes permettant de dissocier les traitements applicatifs en fonction de leur criticité, tel que par exemple le traitement batch versus traitements transactionels, ou encore de tenir compte de la saisonnalité du cycle de vie de l'application, c'est à dire la période de clôture ou activité normale; et comporte des moyens permettant d'associer ces périodes d'analyse à chacune des sondes en fonction de l'application qu'elles doivent surveiller.

## Patentansprüche

1. System (2) zum Überwachen der Leistungen von Informatikinfrastrukturen, wenn eine Anwendung in Produktion auf einer Informatikinfrastruktur benutzt wird, die insbesondere Ressourcen umfasst, die eine Zielinformatikarchitektur definieren, die eine schematische Darstellung von Interaktionen zwischen den verschiedenen Architekturkomponenten eines gegebenen Subperimeters, Verbindungskette genannt, bildet, um die Infrastrukturjustierungen vorherzusehen, die zum Beschleunigen der Reaktion auf Vorfälle notwendig sind, die eine Beeinträchtigung mit sich bringen, nämlich eine Unterbrechung von von der Anwendung gelieferten Diensten, wobei das System **dadurch gekennzeichnet ist, dass** es Folgendes umfasst:
- mit jeder Ressource assoziierte Sonden zum Erfassen und Weiterleiten der Messinformationen (Metriken), die die Nutzung der Ressourcen repräsentieren;
- Mittel (M3) zum Speichern von von Sonden weitergeleiteten Informationen, assoziiert mit Mitteln zum Verarbeiten dieser Informationen, die ein Historisierungsmodul dieser Informationen bilden;
- zweite Mittel (22) zum Verarbeiten dieser Informationen zum Definieren eines Moduls (M4) zum Historisieren von Reaktionen in Bezug auf die Probleme durch das Überwachungssystem (2) und zweite Mittel zum Speichern der Reaktionen auf die erkannten Probleme;
- wenigstens eine Regelmaschine (21), die es zulässt, auf der Basis der Kreuzung der erfassten und im Speicher (M3), in dem die von den Sonden weitergeleiteten Informationen aufgezeichnet sind, gehaltenen Informationen, von Indikatoren (SLOI) von Service Level Objectives (SLO), von gespeicherten Skalierbarkeitsregeln (SCAL), der Definition von Akzeptabilitätsschwellen (SAi), gespeichert in einem zum Aufzeichnen von Schwellenwerten dedizierten Speicher (M2), von bewährten Praktiken, gespeichert in einem zum Aufzeichnen der Definitionen der bewährten Praktiken dedizierten Speicher (M6), und von Aktivierungsperioden, gespeichert in einem Speicher (M5), der die Aufzeichnung und Definition von Analyseperioden zulässt, Korrelationen zwischen diesen Informationen aufzustellen, um die Entwicklung des Ressourcenverbrauchs an wenigstens einem gegebenen Zeitpunkt, zum Berücksichtigen und Definieren von Vorschlägen zum Umdimensionieren der Verbindungskette in Bezug auf Auslastung, die sie unterstützt oder unterstützen wird.

2. System (2) zum Überwachen der Leistungen von Informatikinfrastrukturen nach Anspruch 1, **dadurch gekennzeichnet, dass** die sondierten Ressourcen jede Cluster-Instanz, jeder Anwendungs-Cache, jede Größe von Dateien JMS (Java Message Service) / JDBC (Java Database Connectivity) zusätzlich zu Prozessor, Ein-/Ausgängen und Speicher sind.

3. System (2) zum Überwachen der Leistungen von Informatikinfrastrukturen nach Anspruch 1 oder 2, **dadurch gekennzeichnet, dass** während der Korrelationen das Überwachungssystem (2) die Daten aus den im Speicher (M3) gespeicherten Leistungstests vergleicht und eine neue Datenreferenz erzeugt, die die anfänglich oder zuvor im Speicher (M3) gespeicherten Daten unter Berücksichtigung dieser neuen Daten ersetzt, wobei das Regelverwaltungssystem die Skalierbarkeitsregeln in Folge modifiziert, um die Umdimensionierung der Infrastruktur zuzulassen.

4. System (2) zum Überwachen der Leistungen von Informatikinfrastrukturen nach einem der Ansprüche 1 bis 3, **dadurch gekennzeichnet, dass** die Entwicklung des Ressourcenverbrauchs die Historisierung der Resultate und Nutzungstrendinformationen (UT) berücksichtigt, wobei diese Informationen auch zum Vorhersagen des Bedarfs und zum Erzeugen der Befehle zum Umdimensionieren der Infrastruktur berücksichtigt werden.

5. System (2) zum Überwachen der Leistungen von Informatikinfrastrukturen nach einem der Ansprüche 1 bis 4, **dadurch gekennzeichnet, dass** die Aktivität von wenigstens einem definierten Tag als "größer" mit eventuell einem Parameter gespeichert wird, der einen Prozentanteil in Bezug auf einen anderen definierten Tag anzeigt, dessen als "normal" angesehene Aktivität in den Aktivitätsperiodeninformationen aufgezeichnet ist, und diese Informationen auch zum Vorhersagen des Bedarfs und zum Erzeugen der Befehle zum Umdimensionieren der Infrastruktur berücksichtigt werden.

6. System (2) zum Überwachen der Leistungen von Informatikinfrastrukturen nach Anspruch 1, **dadurch gekennzeichnet, dass** das globale Qualitätsniveau über die Regelmaschine (21) durch Bestimmen des Mittels aller Zieleinhaltungsniveaus (Prozentanteil SAi in Bezug auf das Ziel) bestimmt wird, gewichtet für jedes Zieleinhaltungsniveau durch den gespeicherten Grad (CRAi) der Bedeutung der Ziele, betrachtet von einem Standpunkt der betrieblichen Auswirkung.

7. System (2) zum Überwachen der Leistungen von Informatikinfrastrukturen nach Anspruch 1 oder 6, **dadurch gekennzeichnet, dass** das globale Qualitätsniveau über die Regelmaschine (21) bestimmt wird, die gespeicherte Regeln in Bezug auf die für die Ressourcen (z.B. CPU) benutzten Metriken und deren Niveau als Prozentanteil der Zieleinhaltung umfasst.

8. System (2) zum Überwachen der Leistungen von Informatikinfrastrukturen nach einem der Ansprüche 1 bis 7, **dadurch gekennzeichnet, dass** die Regeln eine oder mehrere Metriken und auch ein Zeitintervall kombinieren können, das in einem zum Aufzeichnen der Dauern dedizierten Speicher (M1) gespeichert ist.

9. System (2) zum Überwachen der Leistungen von Informatikinfrastrukturen nach einem der Ansprüche 1 bis 8, **dadurch gekennzeichnet, dass** wenigstens eine Regel das Akzeptieren einer Überschreitung von Verarbeitungszeiten von 10 % über eine Periode von beispielsweise einer Stunde zulässt.

10. System (2) zum Überwachen der Leistungen von Informatikinfrastrukturen nach einem der Ansprüche 1 bis 9, **dadurch gekennzeichnet, dass** die gespeicherte Liste von SLO-(Service Level Objectives)-Indikatoren von der oder den Anwendungen abhängig ist, die überwacht werden.

11. System (2) zum Überwachen der Leistungen von Informatikinfrastrukturen nach einem der Ansprüche 1 bis 10, **dadurch gekennzeichnet, dass** jede gespeicherte Liste von SLO-(Service Level Objectives)-Indikatoren mit einer Anwendung assoziiert ist und jedesmal angetroffene Ressourcenelemente (CPU, Speicher, ...) und andere umfasst, die für die Anwendung spezifisch sind (Anzahl offene Dateien, Prozesszahl, ...).

12. System (2) zum Überwachen der Leistungen von Informatikinfrastrukturen nach einem der Ansprüche 1 bis 11, **dadurch gekennzeichnet, dass** jede Akzeptierbarkeitsschwelle (SAi) mit wenigstens einer Regel assoziiert ist, die die Bestimmung der geeigneten Entwicklungsvorschläge für die Anwendungskette zulässt, und die Überschreitung der Schwelle die Ausübung der Regel auslöst.

13. System (2) zum Überwachen der Leistungen von Informatikinfrastrukturen nach einem der Ansprüche 1 bis 12, **dadurch gekennzeichnet, dass** die Erfindung ein Portal (23) umfasst, das das Verfolgen der Ereignisse und des Ergebnisses der erzeugten Aktionen zulässt.

14. System (2) zum Überwachen der Leistungen von Informatikinfrastrukturen nach einem der Ansprüche 1 bis 13, **dadurch gekennzeichnet, dass** die Saisonalität sowie der durch Berechnen auf der Basis der Historisierung der gespeicherten Metriken bestimmte Nutzungstrend (UT) zum Beeinflussen der Regelmaschine (21) und spezieller der Dimensionierungsregeln von verschiedenen die Infrastruktur bildenden Servern berücksichtigt wird.

15. System (2) zum Überwachen der Leistungen von Informatikinfrastrukturen nach einem der Ansprüche 1 bis 14, **dadurch gekennzeichnet, dass** für eine gegebene Anwendung, wenn die Regelmaschine (21) die Metriken und die Saisonalität von der Analyse ableitet, dass das System zu einem gegebenen Zeitpunkt eine Verdopplung der Belastung in Verbindung mit den Nutzerverarbeitungen unterstützen können muss, die Regel der Regelmaschine (21) die Hinzufügung bestimmter Ressourcenmengen (CPU, Speicher, Cluster-Instanz, Anwendungscache, Größe der Dateien JMS (*Java Message Service*) / JDBC (*Java DataBase Connectivity*)) auf einem solchen und/oder einem solchen Server (Präsentation, Branche, Persistenz) bestimmt und die entsprechenden Aufträge erzeugt.

16. System (2) zum Überwachen der Leistungen von Informatikinfrastrukturen nach einem der Ansprüche 1 bis 15, **dadurch gekennzeichnet, dass** es eine erste Mensch-Maschine-Schnittstelle (IHM1) umfasst, die das Definieren der Zielinformatikarchitektur (Server: Präsentationen, Branche, Persistenz; CPU-Bestandteile: Speicher, Eingang/Ausgang, Netzwerk) umfasst, die die Ressourcen des Nutzungssystems bilden.

17. System (2) zum Überwachen der Leistungen von Informatikinfrastrukturen nach einem der Ansprüche 1 bis 16, **dadurch gekennzeichnet, dass** es eine zweite Mensch-Maschine-Schnittstelle (IHM2) umfasst, die das Definieren der Sonden zulässt, die die von der Nutzung der Ressourcen stammenden Metriken sowie die mit jeder Sonde assoziierten Zieleinhaltungsschwellen weiterleiten.

18. System (2) zum Überwachen der Leistungen von Informatikinfrastrukturen nach einem der Ansprüche 1 bis 17, **dadurch gekennzeichnet, dass** es ein Modul umfasst, das in Assoziation mit einer Schnittstelle (IHM5) das Aktualisieren der Regeln zulässt.

19. System (2) zum Überwachen der Leistungen von Informatikinfrastrukturen nach einem der Ansprüche 1 bis 18, **dadurch gekennzeichnet, dass** die zweite Mensch-Maschine-Schnittstelle (IHM2) das Definieren der Überwachung generischer Elemente auf alle Anwendungen (Lasten, % Ressourcenbelegungen, Antwortzeit, Verarbeitungszeit, CPU-Gebrauchsniveau, Plattenleseniveau, Plattenschreibniveau, ...) zulässt und Anzeigebefehle umfasst, die das Auswählen dieser Elemente und das Aktivieren, im Überwachungssystem (2), des Code zulässt, der zum Durchführen, in der Informatikinfrastruktur, der Maßnahmen durch die Sonden notwendig ist, um das Überwachen dieser generischen Elemente zuzulassen.

20. System (2) zum Überwachen der Leistungen von Informatikinfrastrukturen nach einem der Ansprüche 1 bis 19, **dadurch gekennzeichnet, dass** die zweite Mensch-Maschine-Schnittstelle (IHM2) das Definieren der Überwachung sehr spezifischer Elemente zulässt, erkannt während der Leistungstests unter Last der Anwendung auf einer Infrastruktur von Tests, wobei diese spezifischen Elemente zum Beispiel Folgendem entsprechen: der Anzahl von offenen Dateien oder Ports, JDBC oder JMS Dateien, der Belegungsrate des Dateisystems, der Funktionsrate des Garbage Collectors oder Speicherrekuperators für die Anwendungen J2EE, ..., und umfassend Anzeigebefehle, die das Auswählen dieser Elemente und das Aktivieren, in dem Überwachungssystem (2), des Code zulässt, der zum Realisieren, in der Informatikarchitektur, der Maßnahmen für die Sonden notwendig ist, um die Überwachung dieser sehr spezifischen Elemente zuzulassen.

21. System (2) zum Überwachen der Leistungen von Informatikinfrastrukturen nach einem der Ansprüche 1 bis 20, **dadurch gekennzeichnet, dass** eine dritte Mensch-Maschine-Schnittstelle (IHM3) das Definieren der Analyseperioden für die Sonden zulässt, wobei diese Perioden das Disassoziieren der Anwendungsverarbeitungen in Abhängigkeit von ihrer Kritikalität zulassen, wie zum Beispiel die Batch-Verarbeitung gegenüber transaktioneller Verarbeitung, oder auch die Saisonalität des Lebenszyklus der Anwendung berücksichtigen, d.h. die Abschlussperiode oder normale Aktivität;
und Mittel umfasst, die das Assoziieren dieser Analyseperioden auf jede der Sonden in Abhängigkeit von der Anwendung zulässt, die überwacht werden soll.

## Claims

1. System (2) for monitoring computer infrastructure performance, when an application is used in production on a computer infrastructure comprising, in particular, resources defining a target computer architecture forming a schematic representation of the interactions between the different architecture components of a given so-called linking-chain subperimeter, in order to anticipate the infrastructure adjustments necessary to accelerate the response to incidents resulting in damage, or even an interruption of the services delivered by the application, the system being **characterised in that** it comprises:
- probes associated with each resource for gathering and feeding back the measurement (metric) information representing use of the resources;
- means (M3) for storing the feedback information of the probes, associated with means for processing this information constituting a module for archiving this information;
- second means (22) for processing this information to define a module (M4) for archiving the responses provided to problems by the monitoring system (2) and second means for storing the responses to the problems detected;
- at least one rule engine (21) making it possible, on the basis of comparison of the information gathered and stored in the memory (M3) recording the feedback information of the probes, the indicators (SLOI) of the service level objectives (SLO), the stored scalability rules (SCAL), the definition of acceptability thresholds (SAi) stored in a memory (M2) dedicated to recording thresholds, the good practice stored in a memory (M6) dedicated to recording the definitions of good practice, and the activity periods stored in a memory (M5) allowing the recording and definition of periods of analysis, to establish correlations between these items of information in order to anticipate the trend of consumption of resources on at least one given date, in order to take them into account and define proposals for redimensioning the linking chain in connection with the workload which it supports or which it will support.

2. System (2) for monitoring computer infrastructure performance according to claim 1, **characterised in that** the resources surveyed are each cluster instance, each application cache, each JMS (Java message service) / JDBC (Java database connectivity) file size in addition to the processor, the inputs/outputs, and the memory.

3. System (2) for monitoring computer infrastructure performance according to claim 1 or 2, **characterised in that**, when making correlations, the monitoring system (2) compares the data from performance tests stored in the memory (M3) and generates a new data reference frame which will replace the data initially or previously recorded in the memory (M3), taking these new data into account, the rule management system will modify the scalability rules in consequence in order to allow redimensioning of the infrastructure.

4. System (2) for monitoring computer infrastructure performance according to one of claims 1 to 3, **characterised in that** the trend of consumption of resources takes into account the archiving of results and information on trend of use (UT), this information also being taken into account to anticipate the demand and generate infrastructure redimensioning commands.

5. System (2) for monitoring computer infrastructure performance according to one of claims 1 to 4, **characterised in that** the activity of at least one defined day is stored as "higher" with, if necessary, a parameter indicating the percentage relative to another defined day of which the activity considered "normal" is recorded in the activity period information and **in that** this information is also taken into account to anticipate the demand and generate infrastructure redimensioning commands.

6. System (2) for monitoring computer infrastructure performance according to claim 1, **characterised in that** the global quality level is determined via the rule engine (21) by averaging all weighted levels of compliance with objectives (percentage SAi relative to the target) for each level of compliance with the objectives by the stored degree (CRAi), of importance of the objectives considered from an operational impact viewpoint.

7. System (2) for monitoring computer infrastructure performance according to claim 1 or 6, **characterised in that** the global quality level is determined via the rule engine (21) which comprises stored rules concerning the metrics used on the resources (e.g. CPU) and their level as a percentage of compliance with the objectives.

8. System (2) for monitoring computer infrastructure performance according to one of claims 1 to 7, **characterised in that** the rules may combine one or more metrics and also a time interval stored in a memory (M1) dedicated to recording lengths of time.

9. System (2) for monitoring computer infrastructure performance according to one of claims 1 to 8, **characterised in that** at least one rule makes it possible to accept exceeding 10% of the processing times over a period of one hour, for example.

10. System (2) for monitoring computer infrastructure performance according to one of claims 1 to 9, **characterised in that** the stored list of SLO (service level objectives) indicators depends on the application or applications which are being monitored.

11. System (2) for monitoring computer infrastructure performance according to one of claims 1 to 10, **characterised in that** each stored list of SLO (service level objectives) indicators is associated with an application and comprises some resource elements which are found each time (CPU, memory, etc.) and others which are specific to the application (number of files open, number of processes, etc.).

12. System (2) for monitoring computer infrastructure performance according to one of claims 1 to 11, **characterised in that** each acceptability threshold (SAi) is associated with at least one rule making it possible to determine proposals of appropriate trends of the application chain, and exceeding the threshold triggers execution of the rule.

13. System (2) for monitoring computer infrastructure performance according to one of claims 1 to 12, **characterised in that** the invention comprises a portal (23) which makes it possible to follow the incidents and result of the actions generated.

14. System (2) for monitoring computer infrastructure performance according to one of claims 1 to 13, **characterised in that** the seasonality as well as the trend of use (UT) determined by calculation on the basis of archiving of the stored metrics are taken into account to influence the rule engine (21) and more particularly the rules for dimensioning the different servers that make up the infrastructure.

15. System (2) for monitoring computer infrastructure performance according to one of claims 1 to 14, **characterised in that**, for a given application, if the rule engine (21) deduces from analysis of the metrics and seasonality that the system must be able to support, on a given date, a doubling of the load connected with user processing, the rule of the rule engine (21) will determine the addition of certain quantities of resources (CPU, memory, cluster instance, application cache, JMS (Java message service) / JDBC (Java database connectivity) file size on such and/or such a server (presentation, job, persistence) and will generate the corresponding orders.

16. System (2) for monitoring computer infrastructure performance according to one of claims 1 to 15, **characterised in that** it comprises a first man-machine interface (IHM1) making it possible to define the target computer architecture (servers: presentation, job, persistence; CPU components; input/output memory, network) constituting the resources of the operating system.

17. System (2) for monitoring computer infrastructure performance according to one of claims 1 to 16, **characterised in that** it comprises a second man-machine interface (IHM2) making it possible to define the probes which feed back the metrics from use of resources, as well as the thresholds of compliance with the objectives associated with each probe.

18. System (2) for monitoring computer infrastructure performance according to one of claims 1 to 17, **characterised in that** it comprises a module making it possible, in association with an interface (IHM5), to update the rules.

19. System (2) for monitoring computer infrastructure performance according to one of claims 1 to 18, **characterised in that** the second man-machine interface (IHM2) makes it possible to define the monitoring of generic elements for all applications (loads, % occupation of resources, response time, processing time, level of CPU use, level of disk reading, level of disk writing, ....) and comprises display commands making it possible to select these elements and to activate, in the monitoring system (2), the code necessary to have the measures effected in the computer architecture by the probes making it possible to monitor these generic elements.

20. System (2) for monitoring computer infrastructure performance according to one of claims 1 to 19, **characterised in that** the second man-machine interface (IHM2) makes it possible to define the monitoring of very specific elements, detected during performance tests under load of the application on a test infrastructure, these specific elements corresponding for example to: the number of files or ports open, JDBC or JMS files, the level of occupation of the file system, the level of functioning of the garbage collector or memory retriever for J2EE applications, .... and comprises display commands making it possible to select these elements and to activate, in the monitoring system (2), the necessary code for having the measures effected in the computer architecture by the probes making it possible to monitor these very specific elements.

21. System (2) for monitoring computer infrastructure performance according to one of claims 1 to 20, **characterised in that** a third man-machine interface (IHM3) makes it possible to define periods of analysis for the probes, these periods making it possible to dissociate the application processing according to its criticality, such as for example batch processing versus transaction processing, or else to take into account the seasonality of the life cycle of the application, that is, the period of closure or normal activity; and comprises means making it possible to associate these periods of analysis with each of the probes according to the application which they are to monitor.
